# FASCICULE DE BREVET EUROPEEN

(11) **EP 1 439 621 B1**
(45) Date de publication et mention de la délivrance du brevet: **16.03.2016**
(21) Numéro de dépôt: 03360008.1
(22) Date de dépôt: 14.01.2003
(51) Int. Cl.: H02B 1/21

(54) **Appareillage du type modulaire à monter sur des barres de différentes épaisseurs**
Modulares elektrisches Gerät zum Aufsetzen auf Sammelschienen verschiedener Dicke
Modular electrical apparatus mountable on busbars of different thicknesses

(43) Date de publication de la demande: 21.07.2004
(73) Titulaire: Hager-Electro SAS (Société par Actions Simplifiée), 67210 Obernai (FR)
(72) Inventeur: Deckert, Francis, 67190 Mutzig (FR); Sitz, Thierry, 67210 Obernai (FR)
(74) Mandataire: Nuss, Laurent

(56) Documents cités:
- EP-A- 0 634 768
- DE-A- 19 513 062
- DE-U- 29 806 196

## Description

La présente invention concerne le domaine des installations électriques, en particulier les différents appareillages montés dans les coffrets ou armoires de distribution électrique, en vue de la répartition et de la distribution, et a pour objet un appareillage électrique du type modulaire à monter sur des jeux de barres conductrices de différentes épaisseurs, dont l'un des dispositifs d'accrochage est pourvu d'un moyen de contact s'adaptant à l'épaisseur desdites barres conductrices.

Les montages connus de ces appareillages sur un jeu de barres permettent généralement d'assurer correctement les fonctions habituelles desdits appareillages et donc une bonne distribution de l'énergie.

Toutefois, ces montages connus d'appareillages électriques présentent l'inconvénient de ne pas s'adapter automatiquement sur des épaisseurs de barres différentes.

On connaît ainsi, par DE-A-101 13 698, un appareillage électrique à monter sur un jeu de barres. Cet appareillage présente un cran d'arrêt pouvant coulisser sur une bride de support de barre fixée au niveau d'un logement d'insertion des barres du corps de l'appareillage et pouvant s'enclencher à des niveaux prédéterminés. L'appareillage présenté peut donc être adapté à des barres d'épaisseurs différentes. Il subsiste toutefois un inconvénient pour l'opérateur, en ce qui concerne la fixation de l'appareillage au jeu de barres. A cet effet, il est nécessaire de positionner le cran d'arrêt sur le support de barre de telle manière que sa position soit adaptée à l'épaisseur de la barre, avant de monter l'appareillage sur le jeu de barres.

Le montage décrit ci-dessus présente donc l'inconvénient de nécessiter la détermination de l'épaisseur de la barre avant le montage de l'appareillage sur cette dernière. En effet, l'appareillage ne s'adapte pas directement, sans intervention manuelle de la part de l'opérateur, à l'épaisseur de la barre sur laquelle il est fixé.

Un autre système de fixation d'appareillage électrique sur un jeu de barres est décrit dans DE-A-195 13 062. L'appareillage selon ce document peut être adapté à deux épaisseurs de barres différentes. En effet, le logement de la première barre est muni d'une pièce démontable qui est retirée pour la fixation de l'appareillage sur des barres de grande épaisseur et conservée dans ledit logement pour la fixation sur des barres de plus faible épaisseur. Les logements inférieurs sont munis d'une bride de fixation saisissant chacune une barre, et un taquet de retenue de barre est fixé sous la bride inférieure.

Cet appareillage présente donc également l'inconvénient de nécessiter une opération d'adaptation d'un de ses moyens de fixation à l'épaisseur des barres. En effet, il faut ajuster l'épaisseur du premier logement en fonction de l'épaisseur des barres avant de monter l'appareillage électrique sur lesdites barres.

Il existe aussi des systèmes de fixation par écrou. Là encore, on peut adapter la fixation sur des barres d'épaisseurs différentes, mais le montage et le démontage de l'appareillage ne sont pas rapides.

Le document EP 0 634 768 A2 divulgue un dispositif tripolaire de fusible destiné à être posé sur un système rail conducteur. Le dispositif comprend un levier à crans (9) élastique pour le verrouillage par complémentarité de formes du dispositif avec un des rails conducteur. A l'aide du levier à crans (9), le dispositif peut être posé sur des systèmes rail conducteurs de diamètres différents.

La présente invention a notamment pour but de surmonter ces inconvénients et de proposer un appareillage électrique du type modulaire à monter sur un jeu de barres conductrices s'adaptant sans intervention extérieure à des épaisseurs de barres différentes et à montage et démontage rapides.

A cet effet, elle a pour objet un appareillage électrique du type modulaire présentant les caractéristiques énoncées à la revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue en élévation latérale de l'appareillage selon l'invention lors de son montage sur un jeu de barres de faible épaisseur ;
la figure 2 est une vue analogue à celle de la figure 1 de l'appareillage en position montée sur un jeu de barres de faible épaisseur ;
la figure 3 est une vue analogue à celle de la figure 1 de l'appareillage en position montée sur un jeu de barres de plus grande épaisseur ;
la figure 4 est une vue analogue à celle de la figure 1 de l'appareillage après déverrouillage d'un dispositif d'accrochage et de maintien sur un jeu de barres de plus grande épaisseur ;
la figure 5 est une vue en perspective du moyen de contact d'un dispositif d'accrochage ;
la figure 6 est une vue en perspective de l'intérieur de l'appareillage représentant le moyen de contact de la figure 5 en position de fonctionnement ;
la figure 7 est une vue en perspective, à plus grande échelle, d'un logement d'insertion d'une barre selon l'invention muni d'un dispositif d'accrochage et de maintien.
la figure 8 est une vue en perspective, à plus grande échelle, d'un dispositif d'accrochage et de maintien selon l'invention ;
la figure 9 est une vue en coupe, à plus grande échelle, du dispositif d'accrochage et de maintien représenté sur la figure 8 ;
la figure 10 est une vue en coupe suivant le plan U-U du dispositif d'accrochage et de maintien représenté sur la figure 9 ;
la figure 11 est une vue en coupe suivant le plan V-V du dispositif d'accrochage et de maintien représenté sur la figure 9 ;
la figure 12 est une vue partielle, en perspective au niveau du plan de joint du corps de l'appareillage électrique, au niveau du dispositif d'accrochage et de maintien représenté sur la figure 8 ;
la figure 13 est une vue en perspective, à plus grande échelle, d'une variante de réalisation du dispositif d'accrochage et de maintien ;
la figure 14 est une vue en coupe, à plus grande échelle, du dispositif selon la figure 13 ;
la figure 15 est une vue en coupe suivant le plan U-U du dispositif selon la figure 14, et
la figure 16 est une vue en perspective, à plus grande échelle, d'un logement d'insertion d'une barre muni du dispositif selon les figures 13 à 15.

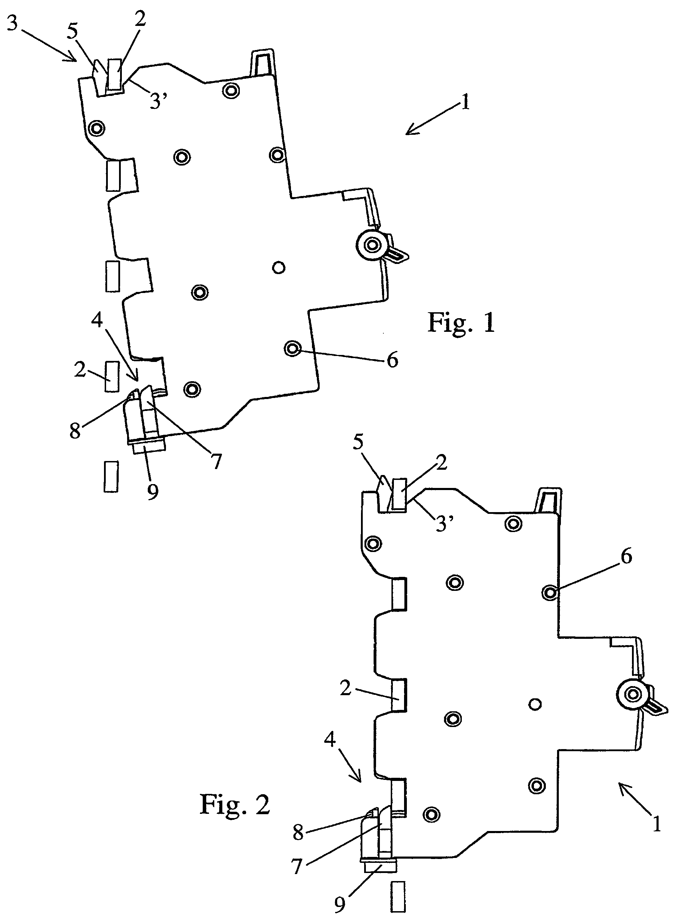

Comme le montre la figure 1, l'appareillage électrique 1 du type modulaire, à monter sur un jeu de barres 2 conductrices d'une installation électrique, en particulier d'un tableau de distribution, comporte une face d'accrochage sur le jeu de barres 2 munie d'au moins deux dispositifs 3 et 4 d'accrochage et de maintien sur lesdites barres formés par des logements d'insertion desdites barres 2.

Le corps de l'appareillage électrique 1 peut être réalisé sous la forme de deux coquilles symétriques assemblées suivant leur plan de joint par l'intermédiaire de rivets 6 traversant des fûts d'assemblage correspondants.

Les logements d'insertion des barres 2 présentent avantageusement chacun une came facilitant l'insertion desdites barres 2 dans les logements correspondants, lors du montage de l'appareillage électrique 1. Ainsi, le logement du côté du dispositif 3 présente une came 3'.

Pour éviter d'effectuer des opérations d'adaptation de l'appareillage 1 sur le jeu de barres 2 en fonction de l'épaisseur desdites barres 2, l'un des dispositifs 3 d'accrochage et de maintien est pourvu d'un moyen de contact 5 s'adaptant automatiquement à différentes épaisseurs de barres et serrant une barre 2 correspondante en position de service.

Ce moyen de contact 5 est réalisé préférentiellement sous la forme d'une griffe montée en saillie et de manière pivotable dans le logement formant le dispositif 3 d'accrochage et de maintien.

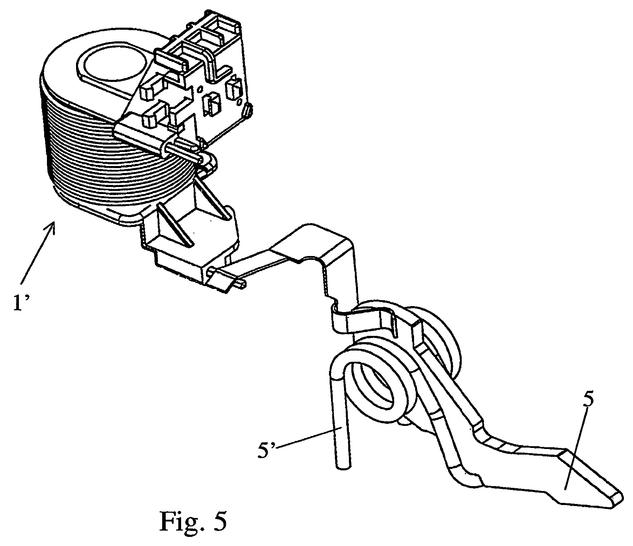

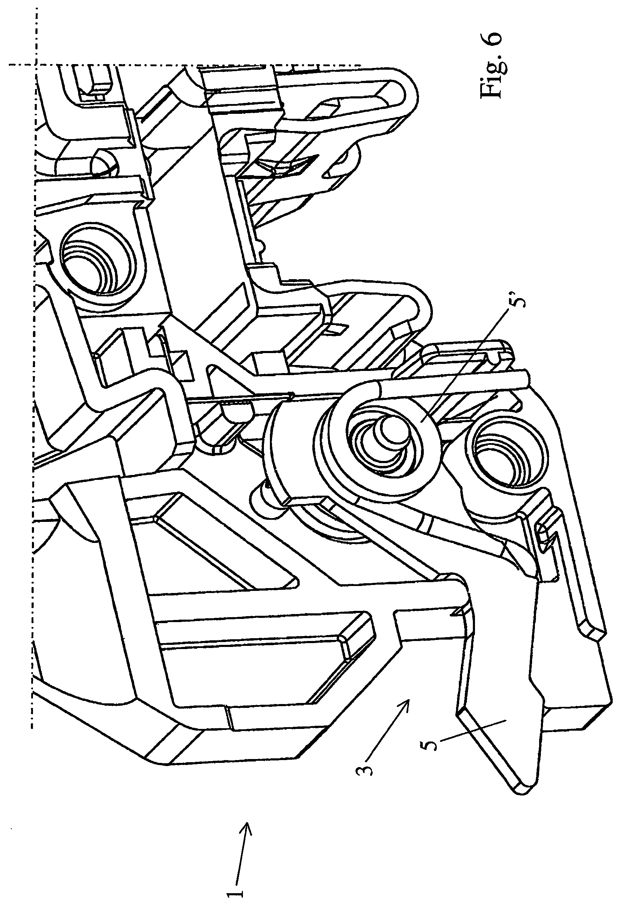

Comme le montrent les figures 5 et 6, la griffe 5 est avantageusement constituée par un levier coudé, guidé de manière pivotable dans le boîtier de l'appareillage 1, et chargé par un ressort 5' de rappel le maintenant dans une position de serrage des barres 2. Le levier et/ou le ressort 5' sont reliés électriquement au circuit électrique 1' de l'appareillage 1, garantissant ainsi un contact électrique permanent entre l'appareillage électrique 1 et la barre 2 serrée par la griffe 5, tout en appliquant fortement l'appareillage 1 sur ladite barre 2.

Ce mode de réalisation a l'avantage d'assurer un maintien de l'appareillage sur toutes épaisseurs de barres 2, grâce à la tension du ressort 5'. Par ce serrage, et également par le fait que le ressort 5' est relié électriquement au circuit électrique 1' de l'appareillage 1, le contact électrique entre l'appareillage 1 et la barre 2 serrée par le ressort 5' est assuré et réalisé quelle que soit l'épaisseur de la barre 2.

Selon une variante, non représentée aux dessins annexés, la griffe 5 peut également être constituée par une lamelle-ressort ou un fil-ressort s'étendant à l'intérieur du logement d'insertion formant le dispositif 3 d'accrochage et de maintien et relié électriquement au circuit électrique 1' de l'appareillage 1.

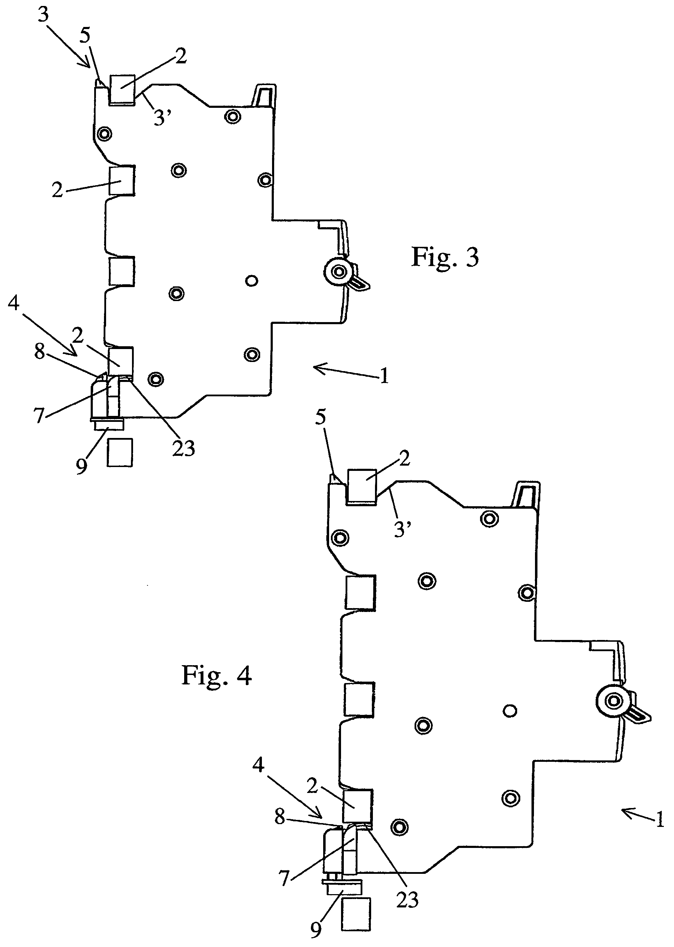

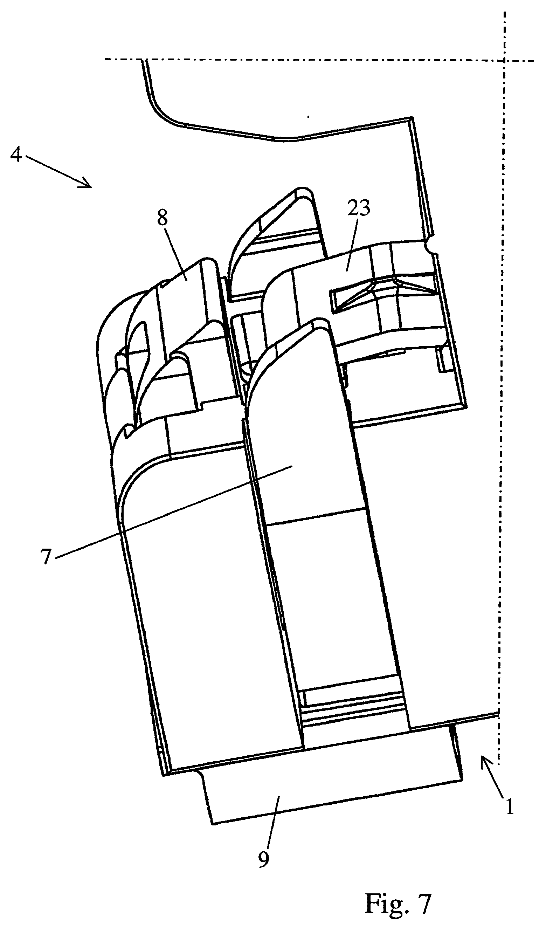

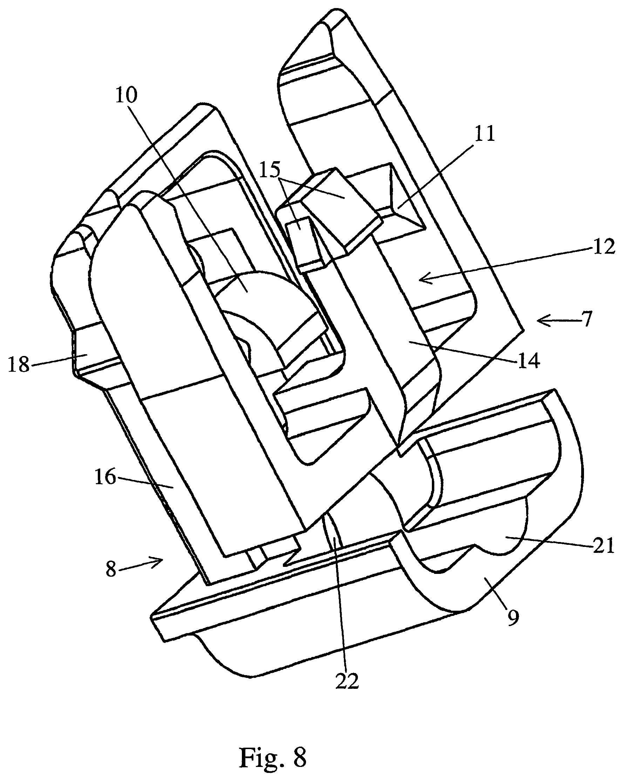

Selon une caractéristique de l'invention, et comme le montrent les figures 3, 4 et 7 à 9, le dispositif 4 d'accrochage et de maintien comporte au moins deux pièces 7 et 8 de maintien de l'appareillage 1, respectivement sur une barre 2 de faible épaisseur et sur une barre 2 de plus grande épaisseur.

Les pièces 7 et 8 de maintien de l'appareillage 1 seront préférentiellement réalisées de manière à assurer le maintien de l'appareillage 1, respectivement sur des barres présentant des épaisseurs différentes.

Pour permettre le démontage de l'appareillage, et donc le déverrouillage des pièces 7 et 8, ces dernières coopèrent entre elles. L'une des pièces 7 forme avantageusement un verrou pour une barre 2 de faible épaisseur et est solidarisée en déplacement avec l'autre pièce 8 de maintien de l'appareillage 1 sur une barre 2 de plus grande épaisseur par l'intermédiaire de moyens d'entraînement 9 et 10 de cette dite autre pièce 8.

L'une des pièces 7 de maintien de l'appareillage 1 sur une barre 2 de faible épaisseur est sous forme d'un verrou coulissant 7 entraîné en déplacement par les moyens d'entraînement de l'autre pièce 8 de maintien de l'appareillage 1 sur une barre 2 de plus grande épaisseur, qui est sous forme d'un coulisseau 8.

Le verrou coulissant 7, formant l'une des pièces 7 de maintien de l'appareillage 1 sur une barre 2 de faible épaisseur, est préférentiellement réalisé sous la forme d'une pièce en U, dont les deux ailes comportent une partie 11 sous forme de came, en saillie vers l'intérieur dudit verrou coulissant 7 et coopérant avec un logement 11' prévu dans le corps de l'appareillage électrique 1. Les ailes peuvent être avantageusement incurvées afin d'exercer une légère pression sur le corps de l'appareillage pour assurer le maintien en position de service du verrou coulissant ou pièce 7. Les logements 11' se présentent avantageusement sous forme d'évidements en V à ailes inégales. Les pentes de ces évidements en V favorisent le positionnement des cames 11 dans leur position de service ou leur retour dans cette position de service suite à un déplacement du verrou 7.

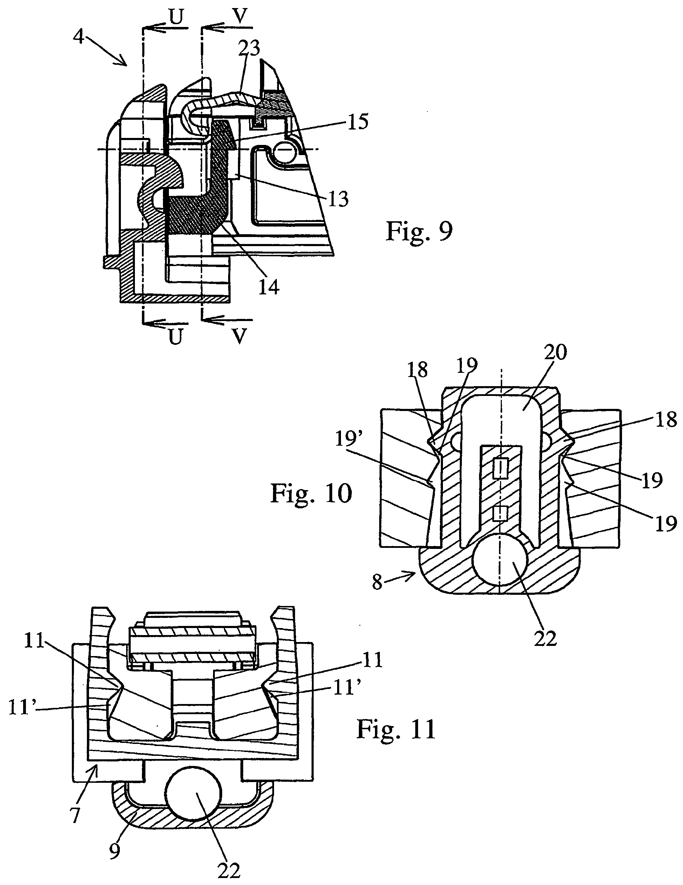

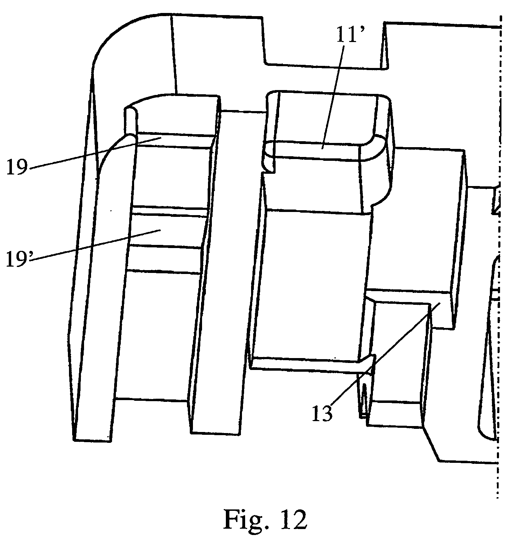

Lors du montage de l'appareillage sur les barres 2, la barre 2 devant être fixée par le dispositif d'accrochage et de maintien 4 exerce une pression sur les ailes du verrou coulissant 7, poussant ainsi lesdites ailes hors du logement de la barre 2 correspondante, en direction du corps de l'appareillage 1. Il s'ensuit que le verrou 7 est déplacé en direction du moyen d'entraînement 9 du coulisseau 8. Les cames 11 exercent une pression à l'intérieur des logements 11', ce qui a pour effet de tendre à maintenir le verrou 7 en position. Ce dernier, par réaction à cette pression, a tendance à retourner dans sa position initiale, c'est à dire celle dans laquelle les cames 11 sont positionnées au fond des logements 11', lesdites cames 11 ayant tendance, lors du déplacement du verrou 7, à retourner vers le fond des logements 11' par glissement sur la pente inclinée correspondante desdits logements (voir figures 11 et 12).

Ainsi, lors du montage de l'appareillage 1 sur une barre 2 de faible épaisseur, le verrou coulissant 7 revient dans sa position initiale lorsque la barre 2 est positionnée dans le logement d'insertion correspondant dudit appareillage 1.

Lors du montage de l'appareillage 1 sur une barre 2 de plus grande épaisseur, la barre 2, du fait qu'elle recouvre les ailes du verrou coulissant 7, continue à exercer une pression sur les extrémités des ailes de ce dernier, même lorsqu'elle est positionnée dans le logement correspondant dudit appareillage 1. Dans ce cas, ladite barre 2 est verrouillée par la pièce 8, comme nous le décrirons ci-après.

Selon une caractéristique de l'invention, l'âme de la pièce 7 en U est munie d'un moyen 12 de retenue du verrou coulissant 7 dans l'appareillage électrique 1. Ce moyen 12 est de manière avantageuse en saillie entres les deux ailes dudit verrou coulissant 7 et au-dessus du niveau supérieur de ces ailes et coopère avec un logement 13 prévu dans le corps de l'appareillage électrique 1, de sorte qu'il stoppe l'entraînement du verrou coulissant 7 par la pièce 8 et permet ainsi de retenir les deux pièces 7 et 8 dans le corps de l'appareillage 1.

Le moyen de retenue 12 peut être réalisé sous la forme d'un bras 14, dont l'extrémité libre présente des saillies d'encliquetage 15 destinées à assurer un maintien de la pièce 7 dans le corps de l'appareillage 1, ainsi que le non-arrachage du dispositif 4.

Les saillies d'encliquetage 15 sont préférentiellement au nombre de trois et sont disposées sur les deux faces latérales et sur la face supérieure dudit bras 14. Ces saillies facilitent l'appui du bras 14 dans le logement 13.

Selon une autre caractéristique de l'invention, le coulisseau 8 formant l'autre pièce de maintien de l'appareillage 1 sur une barre 2 de plus grande épaisseur est constitué par un corps principal 16 de section sensiblement rectangulaire. Sur ce corps principal 16 est avantageusement supporté le verrou coulissant 7 comportant les moyens 9 et 10 d'entraînement dudit verrou coulissant 7, qui agissent respectivement sur les deux faces de l'âme du verrou coulissant 7.

De manière préférentielle, l'un des moyens 9 d'entraînement du verrou coulissant 7 est sous forme d'une paroi 9 de manoeuvre et de butée s'étendant perpendiculairement au corps principal 16 et en face du verrou coulissant 7. L'autre moyen 10 d'entraînement du verrou coulissant 7 est sous forme d'un crochet 10 s'étendant dans un évidemment 20 prévu dans le corps principal 16 et dont l'extrémité libre est en saillie au-dessus du plan du corps principal 16, du même côté que la paroi 9 de manoeuvre et de butée.

De ce fait, le déverrouillage est réalisé par une action sur la paroi 9, c'est-à-dire qu'un déplacement de la paroi 9 (vers le bas sur les figures 1 à 4), entraîne le verrou coulissant 7 par l'intermédiaire du crochet 10 qui agit sur le verrou coulissant 7.

Pour le maintien en position verrouillée, les faces latérales du corps principal 16 sont munies chacune, près de leur extrémité opposée à la paroi de manoeuvre et de butée 9, d'une came 18 destinée à coopérer avec une cavité 19 de forme correspondante du corps de l'appareillage électrique 1. Lors du déverrouillage, chacune desdites cames 18 s'enclenche dans une cavité 19', qui assure le maintien en position déverrouillée ou rétractée du dispositif 4 d'accrochage et de maintien (voir figures 10 et 12).

La paroi de manoeuvre et de butée 9 est avantageusement pourvue, sur sa face tournée vers le corps principal 16 du coulisseau 8, d'un évidement 21 se prolongeant, au niveau de la jonction de ladite paroi 9 avec ledit corps principal 16 par un perçage borgne 22. Le déverrouillage dudit dispositif 4 peut ainsi être réalisé au moyen d'un tournevis ou tout dispositif analogue que l'on insère dans l'évidement 21 et dans le perçage borgne 22 et que l'on fait légèrement pivoter en s'appuyant sur l'appareillage 1, pour déplacer le coulisseau 8 et, par entraînement de ce dernier, le verrou coulissant 7.

Afin de relier électriquement l'appareillage électrique 1 avec la barre 2 amenée à être verrouillée par le dispositif 4 d'accrochage et de maintien, ce dernier est pourvu, en outre, d'un moyen 23 de prise de contact s'étendant au-dessus des pièces 7 et 8 de maintien de l'appareillage 1. Ce moyen 23 permet aussi bien de réaliser un contact avec une barre 2 de faible épaisseur qu'avec une barre 2 de plus grande épaisseur.

Le montage de l'appareillage électrique 1 est réalisé de la manière suivante :
a) Positionnement de la face d'accrochage de l'appareillage 1 en face du jeu de barres ; la griffe 5 assure une pression sur la barre, quelle que soit l'épaisseur de cette dernière.
b) Rabattement de l'appareillage 1 autour de la première barre 2 (voir fig. 2), jusqu'à entrée en contact de la deuxième barre avec le dispositif 4 du logement de réception correspondant.
   Comme décrit plus haut, dans le cas d'une barre de faible épaisseur (voir fig. 1), le verrou coulissant 7 se remet en position initiale, dans laquelle ses ailes font saillie dans le logement d'insertion et retiennent ainsi la barre 2. Dans le cas d'une barre de plus grande épaisseur (voir fig.3), le verrou coulissant 7 reste dans une position rétractée.
c) Actionnement du dispositif d'accrochage et de maintien 4, par une légère pression sur la paroi 9 (vers le haut sur les figures), de sorte que le coulisseau 8, en saillie dans le logement d'insertion, assure l'accrochage et le maintien de l'appareillage 1 sur des barres 2 de plus grande épaisseur.

Pour le démontage de l'appareillage électrique 1, il suffit de déverrouiller le dispositif 4 en déplaçant la paroi 9 pour faire coulisser le coulisseau 8 et entraîner le verrou 7, libérant ainsi la barre 2 correspondante (voir fig. 4).

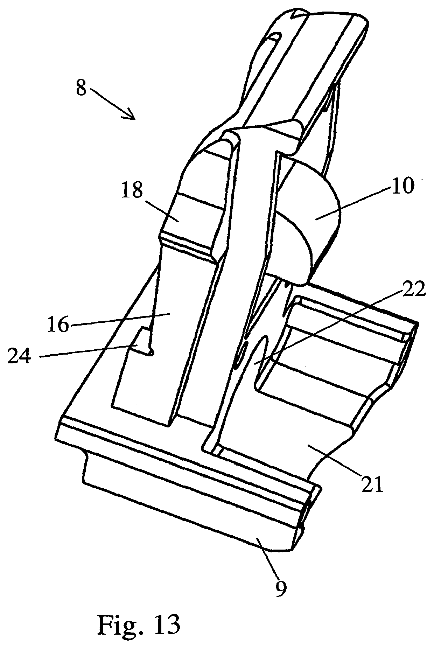

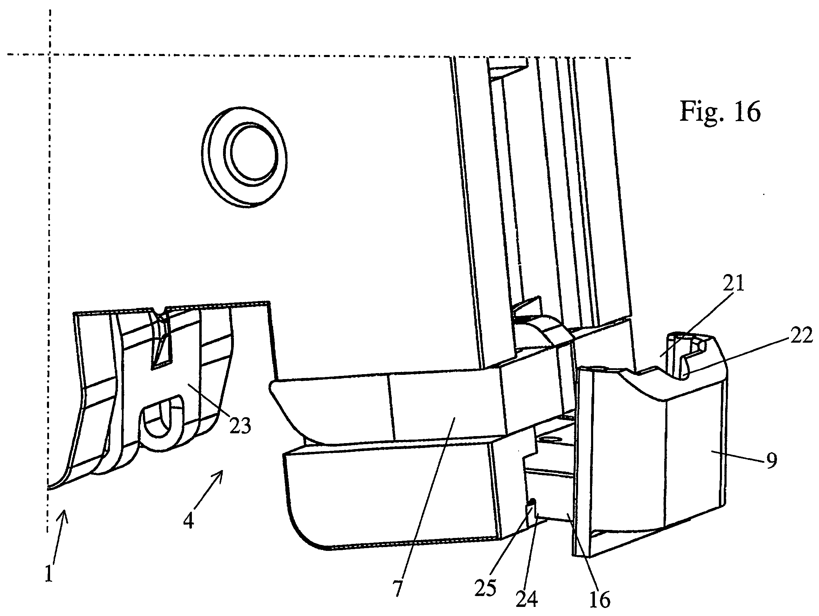

Selon une variante de réalisation de l'invention, représentée sur les figures 13 à 16 des dessins annexés, l'extrémité du coulisseau 8, du côté de la paroi de manoeuvre et de butée 9, peut présenter un décrochage 24 du coulisseau coopérant, en position de déverrouillage du dispositif 4, avec une butée 25 formée par le corps de l'appareillage électrique 1, pour son maintien dans cette position de déverrouillage contre une force de rappel en position de verrouillage.

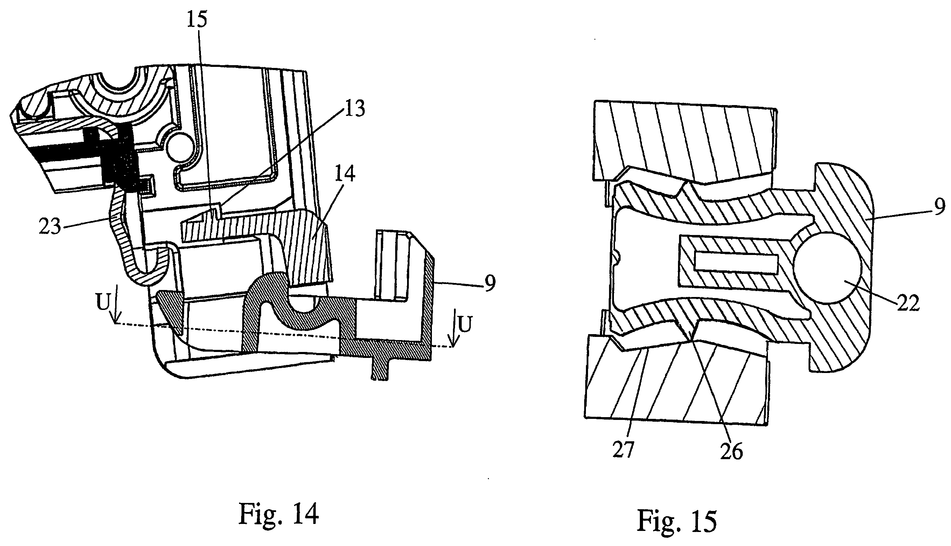

A cet effet, la force de rappel en position de verrouillage est avantageusement réalisée par coopération de cames 26 du coulisseau 8 avec des pentes correspondantes d'évidements 27 prévus dans le corps de l'appareillage 1 (voir figure 15). Ainsi, lors d'un déplacement du coulisseau 8 dans le sens d'un déverrouillage, en particulier au moyen d'un outil tel qu'un tournevis agissant sur la paroi 9 dudit coulisseau, ce dernier a tendance, lors de sa course de déplacement vers le bas, à être basculé perpendiculairement à son axe longitudinal. Il en résulte que son décrochage 24 vient en appui contre la butée 25 du corps de l'appareillage 1. Du fait que le basculement du coulisseau 8 est relativement faible et que le contact entre le décrochage 24 et la butée 25 s'effectue sur une très faible surface, le maintien en position de déverrouillage du coulisseau 8 est à la limite d'un équilibre stable. Il s'ensuit qu'une faible impulsion contre la paroi 9 du coulisseau 8 a pour effet de libérer le décrochage 24 de la butée 25.

Lors du déplacement du coulisseau 8 vers la position de déverrouillage, les cames 26 sont extraites du fond des évidements 27 et glissent sur les pentes correspondantes de ces dernières. Ce déplacement des cames 26 est réalisable du fait de la possibilité de déformation élastique des parois du coulisseau 8 portant lesdites cames. Ainsi, au fur et à mesure du déplacement de déverrouillage, la pression des cames 26 sur les pentes correspondantes des évidements 27 augmente, de sorte que la force de réaction correspondante des cames sur lesdites pentes tend à rappeler le coulisseau 8 dans sa position de verrouillage.

## Revendications

1. Appareillage électrique (1) du type modulaire à monter sur un jeu de barres (2) conductrices d'une installation électrique, en particulier d'un tableau de distribution, comportant une face d'accrochage sur le jeu de barres (2) munie d'au moins deux dispositifs (3 et 4) d'accrochage et de maintien sur lesdites barres formés par des logements d'insertion desdites barres (2), l'un des dispositifs (3) d'accrochage et de maintien étant pourvu d'un moyen de contact (5) sous forme d'une griffe montée en saillie et de manière pivotable dans le logement formant le dispositif (3) d'accrochage et de maintien, s'adaptant automatiquement à différentes épaisseurs de barres et serrant une barre (2) correspondante en position de service, la griffe (5) étant, soit constituée par un levier coudé guidé de manière pivotable dans le boîtier de l'appareillage (1) et chargé par un ressort (5') de rappel le maintenant dans une position de serrage des barres (2), soit constituée par une lamelle-ressort ou un fil-ressort s'étendant à l'intérieur du logement d'insertion formant le dispositif (3) d'accrochage et de maintien, **caractérisé en ce que**, la griffe (5) est reliée électriquement au circuit électrique (1') de l'appareillage (1).

2. Appareillage électrique, selon la revendication 1, **caractérisé en ce que** le dispositif (4) d'accrochage et de maintien comporte au moins deux pièces (7 et 8) de maintien de l'appareillage (1), respectivement sur une barre (2) de faible épaisseur et sur une barre (2) de plus grande épaisseur.

3. Appareillage électrique, selon la revendication 2, **caractérisé en ce que** les pièces (7 et 8) coopèrent entre elles, l'une des pièces (7) de maintien de l'appareillage (1) sur une barre (2) de faible épaisseur étant sous forme d'un verrou coulissant (7) solidarisé et entraîné en déplacement avec l'autre pièce (8) de maintien de l'appareillage (1) sur une barre (2) de plus grande épaisseur, qui est sous forme d'un coulisseau (8), par l'intermédiaire de moyens d'entraînement (9 et 10) de cette dite autre pièce (8).

4. Appareillage électrique, selon la revendication 3, **caractérisé en ce que** le verrou coulissant (7) est réalisé sous la forme d'une pièce en U, dont les deux ailes comportent une partie (11) sous forme de came, en saillie vers l'intérieur dudit verrou coulissant (7), coopérant avec un logement (11') prévu dans le corps de l'appareillage électrique (1), l'âme de ladite pièce en U étant munie d'un moyen (12) de retenue dudit verrou coulissant (7) dans l'appareillage électrique (1), ce moyen (12) étant en saillie entres les deux ailes dudit verrou coulissant (7) et au-dessus du niveau supérieur de ces ailes et coopérant avec un logement (13) prévu dans le corps de l'appareillage électrique (1).

5. Appareillage électrique, selon la revendication 4, **caractérisé en ce que** le moyen de retenue (12) est réalisé sous la forme d'un bras (14) dont l'extrémité libre présente des saillies d'encliquetage (15) destinées à assurer un maintien de la pièce (7) dans le corps de l'appareillage électrique (1).

6. Appareillage électrique, selon la revendication 3, **caractérisé en ce que** le coulisseau (8) formant l'autre pièce (8) de maintien de l'appareillage (1) sur une barre (2) de plus grande épaisseur est constitué par un corps principal (16) de section sensiblement rectangulaire, sur lequel est supporté le verrou coulissant (7) et comportant les moyens (9 et 10) d'entraînement dudit verrou coulissant (7) qui agissent respectivement sur les deux faces de l'âme du verrou coulissant (7).

7. Appareillage électrique, selon la revendication 6, **caractérisé en ce que** l'un des moyens (9) d'entraînement du verrou coulissant (7) est sous forme d'une paroi (9) de manoeuvre et de butée s'étendant perpendiculairement au corps principal (16) et en face du verrou coulissant (7), l'autre moyen (10) d'entraînement du verrou coulissant (7) étant sous forme d'un crochet (10) s'étendant dans un évidemment (20) prévu dans le corps principal (16) et dont l'extrémité libre est en saillie au-dessus du plan du corps principal (16), du même côté que la paroi (9) de manoeuvre et de butée.

8. Appareillage électrique, selon la revendication 6, **caractérisé en ce que** les faces latérales du corps principal (16) sont munies chacune, près de leur extrémité opposée à la paroi de manoeuvre et de butée (9), d'une came (18) destinée à coopérer avec une cavité (19) de forme correspondante du corps de l'appareillage électrique (1).

9. Appareillage électrique, selon la revendication 6, **caractérisé en ce que** la paroi de manoeuvre et de butée (9) est pourvue, sur sa face tournée vers le corps principal (16) du coulisseau (8), d'un évidement (21) se prolongeant, au niveau de la jonction de ladite paroi (9) avec ledit corps principal (16) par un perçage borgne (22).

10. Appareillage électrique, selon l'une quelconque des revendication 3 à 9, **caractérisé en ce que** l'extrémité du coulisseau (8), du côté de la paroi de manoeuvre et de butée (9), présente un décrochage (24) du coulisseau coopérant, en position de déverrouillage du dispositif (4), avec une butée (25) formée par le corps de l'appareillage électrique (1), pour son maintien dans cette position de déverrouillage contre une force de rappel en position de verrouillage.

11. Appareillage électrique, selon la revendication 10, **caractérisé en ce que** la force de rappel en position de verrouillage est réalisée par coopération de cames (26) du coulisseau (8) avec des pentes correspondantes d'évidements (27) prévus dans le corps de l'appareillage (1).

## Patentansprüche

1. Elektrische Vorrichtung (1) des modularen Typs zur Montage auf eine elektrisch leitende Sammelschiene einer elektrischen Installation, insbesondere einer Verteilertafel, umfassend eine Koppelseite zur Sammelschiene (2), die mit wenigstens zwei Koppel- und Haltevorrichtungen (3 und 4) auf den Schienen, die von Aufnahmen zum Einfügen der Schienen ausgebildet sind, versehen ist, wobei eine der Koppel- und Haltevorrichtungen (3) mit einem Kontaktmittel (5) in Form einer Kralle versehen ist, die vorstehend und schwenkbar in der Aufnahme, die die Koppel- und Haltevorrichtung (3) bildet, angeordnet ist, wobei sich das Kontaktmittel (5) automatisch an verschiedene Dicken der Schienen anpasst und eine entsprechende Schiene in einer Wirkposition einklemmt, wobei die Kralle (5) entweder von einem gebogenen Hebel, der schwenkbar in dem Gehäuse der Vorrichtung (1) geführt ist und von einer Rückholfeder (5') beaufschlagt wird, um diesen in einer Position zum Klemmen der Schienen (2) zu halten, oder durch eine Federlamelle oder Drahtfeder gebildet ist, die sich in das Innere der Einfügeaufnahme, welche die Koppel- und Haltevorrichtung bildet, erstreckt, **dadurch gekennzeichnet, dass** die Kralle (5) elektrisch mit dem Stromkreis (1') der Vorrichtung verbunden ist.

2. Elektrische Vorrichtung nach Anspruch 1, **dadurch gekennzeichnet, dass** die Koppel- und Haltevorrichtung (4) wenigstens zwei Teile (7 und 8) zum Halten der Vorrichtung (1) jeweils auf einer Schiene mit einer geringen Dicke und auf einer Schiene mit einer größeren Dicke umfasst.

3. Elektrische Vorrichtung nach Anspruch 2, **dadurch gekennzeichnet, dass** die Teile (7 und 8) miteinander wechselwirken, wobei das eine Teil (7) zum Halten der Vorrichtung (1) auf einer Schiene (2) mit geringer Dicke in Form eines Schieberiegels (7) ausgebildet ist und mit dem anderen Teil (8) zum Halten der Vorrichtung (1) auf einer Schiene (2) größerer Dicke, das in Form eines Schiebers (8) ausgebildet ist, verbunden ist und von dem anderen Teil (8) mittels Mitnahmemitteln (9 und 10) des anderen Teils (8) verschiebbar mitgenommen wird.

4. Elektrische Vorrichtung nach Anspruch 3, **dadurch gekennzeichnet, dass** der Schieberiegel (7) in Form eines U-förmigen Teils ausgebildet ist, von dem die beiden Schenkel einen Abschnitt (11) in Form einer Nocke aufweisen, welche sich in das Innere des Schieberiegels (7) erstreckt und mit einer Aufnahme (11') wechselwirkt, welche in dem Körper der elektrischen Vorrichtung (1) vorgesehen ist, wobei der Steg des U-förmigen Teils mit Mitteln (12) zum Zurückhalten des Schieberiegels (7) in der elektrischen Vorrichtung (1) versehen ist, wobei diese Mittel (12) zwischen den zwei Schenkeln des Schieberiegels (7) und oberhalb der Schenkel vorstehen und mit einer Aufnahme (13), die in dem Körper der elektrischen Vorrichtung (1) vorgesehen ist, wechselwirken.

5. Elektrische Vorrichtung nach Anspruch 4, **dadurch gekennzeichnet, dass** das Rückhaltemittel (12) in Form eines Armes (14) ausgebildet ist, dessen freies Ende Rastvorsprünge (15) aufweist, die dafür vorgesehen sind, ein Halten des Teils (7) in dem Körper der elektrischen Vorrichtung (1) sicherzustellen.

6. Elektrische Vorrichtung nach Anspruch 3, **dadurch gekennzeichnet, dass** der Schieber (8), welcher das andere Teil (8) zum Halten der Vorrichtung (1) auf einer Schiene (2) mit einer größeren Dicke bildet, aus einem Hauptkörper (16) mit einem im Wesentlichen rechteckigen Querschnitt gebildet ist, auf dem der Schieber (7) gestützt ist und der die Mittel (9 und 10) zum Mitnehmen des Schieberiegels (7), welche jeweils auf die zwei Seiten des Stegs des Schieberiegels (7) wirken, umfasst.

7. Elektrische Vorrichtung nach Anspruch 6, **dadurch gekennzeichnet, dass** eines der Mittel (9) zum Mitnehmen des Schieberiegels (7) die Form einer Betätigungs- und Anschlagswand aufweist, die sich senkrecht zu dem Hauptkörper (16) und gegenüber dem Schieberiegel erstreckt, wobei das andere Mitnahmemittel (10) des Schieberiegels (7) in Form eines Hakens (10) ausgebildet ist, der sich in eine Aussparung (20) erstreckt, die in dem Hauptkörper (16) vorgesehen ist, und dessen freies Ende über die Ebene des Hauptkörpers (16) auf der gleichen Seite wie die Bedien- und Anschlagswand (9) vorspringt.

8. Elektrische Vorrichtung nach Anspruch 6, **dadurch gekennzeichnet, dass** die Seitenwände des Hauptkörpers (16) in der Nähe des äußeren Endes, welches der Betätigungs- und Anschlagswand (9) entgegengesetzt liegt, jeweils mit einer Noppe (18), die ausgelegt ist, mit einem Hohlraum (19) der entsprechenden Form des Körpers der elektrischen Vorrichtung (1) wechselzuwirken, versehen ist.

9. Elektrische Vorrichtung nach Anspruch 6, **dadurch gekennzeichnet, dass** die Betätigungs- und Anschlagswand (9) auf der Seite, die in Richtung des Hauptkörpers (16) des Schiebers (8) weist, mit einer Aussparung (21) versehen ist, die sich auf Höhe der Verbindung der Wand (9) mit dem Hauptkörper (16) durch eine Blindbohrung (22) fortsetzt.

10. Elektrische Vorrichtung nach einem der Ansprüche 3 bis 9, **dadurch gekennzeichnet, dass** das Ende des Schiebers (8) auf der Seite der Betätigungs- und Anschlagswand (9) ein Absetzmittel (24) des Schiebers aufweist, welches in der Entriegelungsposition der Vorrichtung (4) mit einem Anschlag (25), der von dem Körper der elektrischen Vorrichtung (1) gebildet ist, wechselwirkt, um diesen in dieser Entriegelungsposition gegen die Rückholkraft in die Verriegelungsposition zu halten.

11. Elektrische Vorrichtung nach Anspruch 10, **dadurch gekennzeichnet, dass** die Rückholkraft in die Verriegelungsposition durch das Zusammenwirken von Noppen (26) des Schiebers (8) mit den entsprechenden Steigungen von Aussparungen (27), welche in dem Körper der Vorrichtung (10) vorgesehen sind, umgesetzt ist.

## Claims

1. Electrical apparatus (1) of the modular type for mounting on a set of conducting bars (2) of an electrical installation, in particular a distribution panel, comprising a fastening surface on the set of bars (2) provided with at least two devices (3 and 4) for fastening and supporting on said bars formed by insertion housings of said bars (2), one of the fastening and supporting devices (3) being provided with a contact means (5) in the form of a claw mounted in a projecting and pivotable manner in the housing forming the fastening and supporting device (3), which adjusts automatically to different bar thicknesses and clamping a corresponding bar (2) in a position of use, the claw (5) being formed either by a bent lever guided in a pivotable manner in the housing of the apparatus (1) and charged by a restoring spring (5') which holds it in a clamping position of the bars (2) or by lamella spring or a wire spring extending inside the insertion housing forming the fastening and support device (3), **characterised in that** the handle (5) is connected electrically to the electric circuit (1') of the apparatus (1).

2. Electrical apparatus according to claim 1, **characterised in that** the fastening and support device (4) comprises at least two parts (7 and 8) for supporting the apparatus (1) on a bar (2) of low thickness and on a bar (2) of greater thickness respectively.

3. Electrical apparatus according to claim 2, **characterised in that** the parts (7 and 8) cooperate with one another, one of the support parts (7) of the apparatus (1) on a bar (2) of low thickness being in the form of a sliding lock (7) joined and driven in displacement with the other support part (8) of the apparatus (1) on a bar (2) of greater thickness, which is in the form of a slide (8), by means of drive means (9 and 10) of said other part (8).

4. Electrical apparatus according to claim 3, **characterised in that** the sliding lock (7) is designed in the form of a U-shaped part, the two sides of which comprise a part (11) in the form of a cam, projecting towards the inside of said sliding lock (7), cooperating with a housing (11') provided in the body of the electrical apparatus (1), the web of said U-shaped piece being provided with a retaining means (12) of said sliding lock (7) in the electrical apparatus (1), said means (12) projecting between the two sides of said sliding lock (7) and above the upper level of said sides and cooperating with a housing (13) provided in the body of the electrical apparatus (1) .

5. Electrical apparatus according to claim 4, **characterised in that** the retaining means (12) is designed in the form of an arm (14) the free end of which has latching projections (15) designed to ensure the support of the part (7) in the body of the electrical apparatus (1).

6. Electrical apparatus according to claim 3, **characterised in that** the slide (8) forming the other support part (8) of the apparatus (1) on a bar (2) of greater thickness is formed by a main body (16) with a substantially rectangular cross section on which the sliding lock (7) is supported and comprising the drive means (9 and 10) of said sliding lock (7) which act respectively on the two faces of the core of the sliding lock(7).

7. Electrical apparatus according to claim 6, **characterised in that** one of the drive means (9) of the sliding lock (7) is in the form of a manoeuvring and stop wall (9) extending perpendicular to the main body (16) and opposite the sliding lock (7), the other drive means (10) of the sliding lock (7) being in the form of a hook (10) extending into a recess (20) provided in the main body (16) and the free end of which projects above the plane of the main body (16) from the same side as the manoeuvring and stop wall (9).

8. Electrical apparatus according to claim 6, **characterised in that** the lateral faces of the main body (16) are each provided, close to their end opposite the manoeuvring and stop wall (9) with a cam (18) designed to cooperate with a cavity (19) with a shape corresponding to the body of the electrical apparatus (1).

9. Electrical apparatus according to claim 6, **characterised in that** the manoeuvring and stop wall (9) is provided on its face turned towards the main body (16) of the slide (8) with a recess (21) extending at the junction of said wall (9) with said main body (16) through a blind hole (22).

10. Electrical apparatus according to any one of claims 3 to 9, **characterised in that** the end of the slide (8), on the side of the manoeuvring and stop wall (9) has a uncoupling (24) of the slide cooperating in an unlocking position of the device (4) with a stop (25) formed by the body of the electrical apparatus (1) for the support of the latter in this unlocking position against a restoring force in locking position.

11. Electrical apparatus according to claim 10, **characterised in that** the restoring force in a locking position is achieved by the cooperation of cams (26) of the slide (8) with corresponding slopes of recesses (27) provided in the body of the apparatus (1).
